# EUROPÄISCHE PATENTSCHRIFT

(11) **EP 2 082 833 B1**
(45) Veröffentlichungstag und Bekanntmachung des Hinweises auf die Patenterteilung: **14.09.2011**
(21) Anmeldenummer: 08106012.1
(22) Anmeldetag: 18.12.2008
(51) Int. Cl.: B24B 9/00, B23B 5/16

(54) **Entgratungsvorrichtung**
Burr removing device
Dispositif d'ébarbage

(30) Priorität: 22.01.2008 DE 102008000129
(43) Veröffentlichungstag der Anmeldung: 29.07.2009
(73) Patentinhaber: HILTI Aktiengesellschaft, 9494 Schaan (LI)
(72) Erfinder: Merhar, Thomas, 9494 Schaan (LI)
(74) Vertreter: Söllner, Oliver

(56) Entgegenhaltungen:
- GB-A- 2 241 450

## Beschreibung

Die Erfindung betrifft eine Entgratungsvorrichtung zur Bearbeitung eines Endes eines stangenförmigen Elementes gemäss dem Oberbegriff des Anspruches 1.

In der Installationstechnik werden stangenförmige Elemente, wie z. B. Gewindestangen, zum Abhängen und Fixieren von Leitungen, wie beispielsweise Rohrleitungen für Sanitär-, Lüftungs- oder Heizungsinstallationen, verwendet. Die stangenförmigen Elemente werden dabei oftmals von Elementen mit Standardlängen auf die passende Länge zugeschnitten. Dabei entstehen an der Schnittstelle beziehungsweise am entsprechenden Ende Brauen und Grate, welche die Montage des stangenförmigen Elementes an einem Befestigungspunkt, insbesondere einer abgelängten Gewindestange z. B. in einer Schienenmutter, erschweren oder gar verunmöglichen.

Auch im Leitungsbau werden rohrförmige Elemente von Elementen mit Standardlängen auf die passende Länge z. B. auf einer Baustelle zugeschnitten. Hierbei können Brauen und Grate an der Schnittstelle beziehungsweise am entsprechenden Ende ebenfalls eine Kupplung von abgelängten Elementen erschweren oder gar verunmöglichen.

Oftmals werden die Enden der stangenförmigen Elemente mit Hilfe einer handelsüblichen Feile entgratet. Dieser Entgratungsvorgang ist aufwendig und erfordert ein gewisses handwerkliches Geschick.

Aus der DE 200 22 301 U1 ist eine Entgratungsvorrichtung zur Bearbeitung eines Endes eines stangenförmigen Elementes mit einem Grundkörper bekannt, der sich entlang einer Rotationsachse erstreckt, ein erstes Ende und ein dem ersten Ende gegenüberliegendes, zweites Ende aufweist. An dem ersten Ende ist eine sich konisch verjüngende, in Richtung des zweiten Endes verlaufende Aufnahme für das stangenförmige Element vorgesehen. In der kegelstumpfförmigen Aufnahme ist ein parallel zur Kegelmantelfläche verlaufendes, in die Aufnahme hineinragendes Messer als Entgratungseinrichtung vorgesehen. Die Entgratungsvorrichtung weist am zweiten Ende des Grundkörpers einen abragenden Stift als Drehmitnahmemittel zur Kupplung mit einer Antriebseinrichtung für einen maschinellen Antrieb der Entgratungsvorrichtung auf.

Nachteilig an der bekannten Lösung ist, dass insbesondere bei stangenförmigen Elementen mit einem im Verhältnis zur kegelstumpfförmigen Aufnahme kleinen Aussendurchmesser während dem Entgratungsvorgang die Entgratungsvorrichtung leicht verkippen kann, so dass das entsprechende Ende des stangenförmigen Elementes ungleichmässig bearbeitet wird und weiterhin eine Montage des abgelängten stangenförmigen Elementes erschwert ist.

GB 2 241 450 A offenbart eine Entgratungsvorrichtung mit einer Aufnahme für ein stangenförmiges Element und einer in der Aufnahme vorgesehenen Entgratungseinrichtung, die eine Schleiffläche aufweist. Die Aufnahme weist zudem einen zylindrischen Führungsabschnitt auf.

Nachteilig zeigt sich hier, dass nur Elemente mit einem bestimmten Durchmesser bearbeitet werden können.

Aufgabe der Erfindung ist es, eine Entgratungsvorrichtung zur Bearbeitung eines Endes eines stangenförmigen Elementes zu schaffen, die eine einfache und schnelle Bearbeitung des entsprechenden Endes bei Gewährleistung reproduzierbarer Ergebnisse ermöglicht.

Die Aufgabe ist durch die Merkmale des unabhängigen Anspruchs gelöst. Vorteilhafte Weiterbildungen sind in den Unteransprüchen dargelegt.

Gemäss der Erfindung weist die Entgratungsvorrichtung neben der ersten Entgratungseinrichtung in Richtung des zweiten Endes und beabstandet zu der ersten Entgratungseinrichtung zumindest eine weitere Entgratungseinrichtung auf mit einer dem ersten Ende zugewandten Schleiffläche, wobei zwischen der ersten Entgratungseinrichtung und der zumindest einen weiteren Entgratungseinrichtung ein weiterer zylindrischer Führungsabschnitt vorgesehen ist und der Öffnungsquerschnitt des zumindest einen weiteren zylindrischen Führungsabschnitts kleiner als der Öffnungsquerschnitt des ersten zylindrischen Führungsabschnitts ist. Damit lassen sich in vorteilhafter Weise zwei stangenförmige Elemente mit unterschiedlichem Aussendurchmesser mit einer Art Entgratungsvorrichtung entgraten. Eine derartige Aufnahme ist im Längsschnitt stufenförmig ausgebildet.

Das stangenförmige Element wird bis zur Anlage seines beispielsweise abgelängten Endes an der Schleiffläche der ersten Entgratungseinrichtung in die Aufnahme der Entgratungsvorrichtung eingeführt, worauf diese in Rotation versetzt und dabei das Ende des stangenförmigen Elementes entgratet. Mit dem zylindrischen Führungsabschnitt, der eine parallel zu der Rotationsachse verlaufende Innenmantelfläche aufweist, wird das stangenförmige Element während der Bearbeitung seines Endes zentriert und geführt, was eine vorteilhafte Entgratung des Endes ohne ein massgebliches Verkippen der Entgratungseinrichtung gewährleistet. Somit lassen sich stangenförmige Elemente, wie beispielsweise Gewindestangen, Rohre und Vollprofile, in wiederholbarer Art und Weise genau, einfach und schnell entgraten. Der Öffnungsquerschnitt des zylindrischen Führungsabschnitts ist vorteilhaft auf handelsübliche Aussendurchmesser von stangenförmigen Elementen abgestimmt, womit eine vorteilhafte Zentrierung und Führung beim Entgratungsvorgang gegeben ist.

Die Entgratungseinrichtung umfasst z. B. Schneidringe, vorteilhaft aus Hartmetall, die form- und/oder kraftschlüssig in der Aufnahme im Grundkörper der Entgratungsvorrichtung festgelegt sind. Beispielsweise ist die Schleiffläche der Entgratungseinrichtung eine Feilfläche, welche entsprechend zum Feilen von Metall ausgebildet ist. Alternativ oder ergänzend können Schleifkörner die Schleiffläche an der Entgratungseinrichtung bilden.

Vorteilhaft sind drei oder mehr Führungsabschnitte hintereinander in der Aufnahme angeordnet, wobei deren Innendurchmesser ausgehend vom ersten Ende in Richtung des zweiten Endes jeweils stufenartig abnimmt. Vorteilhaft bilden die Entgratungseinrichtungen jeweils Übergangsflächen zwischen den einzelnen Führungsabschnitten aus.

Bevorzugt ist zumindest einer der zylindrischen Führungsabschnitte kreiszylindrisch mit einem Öffnungsquerschnitt, der einen Innendurchmesser aufweist, der ein wenig grösser als der Aussendurchmesser des zu entgratenden stangenförmigen Elementes entspricht. Dies gewährleistet eine vorteilhafte Führung der Entgratungsvorrichtung am stangenförmigen Element während dem Bearbeitungsvorgang des freien Endes.

Vorteilhaft ist jeder der zylindrischen Führungsabschnitte kreiszylindrisch. Damit lassen sich in vorteilhafter Weise zwei stangenförmige Elemente unterschiedlichen Aussendurchmessers mit einer Art Entgratungsvorrichtung entgraten.

Vorzugsweise ist die Schleiffläche zumindest einer Entgratungseinrichtung radial umlaufend, was eine schnelle Entgratung des Endes des stangenförmigen Elementes ermöglicht. Vorteilhaft sind bei mehreren Entgratungseinrichtungen in einer Aufnahme alle Schleifflächen dieser Entgratungseinrichtung radial umlaufend ausgebildet.

Bevorzugt ist die Schleiffläche zumindest einer Entgratungseinrichtung in Richtung des zweiten Endes des Grundkörpers konisch zur Rotationsachse des Grundkörpers geneigt, was eine einfache Fertigung und vorteilhafte Entgratung eines eingeführten Endes eines stangenförmigen Elementes ermöglicht. Die Aufnahme in der Entgratungsvorrichtung weist somit im Bereich der zumindest einen Entgratungseinrichtung einen kegelstumpfförmigen Absatz auf. Sind in der Aufnahme mehrere Entgratungseinrichtungen vorgesehen, so sind vorteilhaft alle Schleifflächen der Entgratungseinrichtungen in Richtung des zweiten Endes des Grundkörpers konisch zur Rotationsachse des Grundkörpers geneigt, womit stangenförmige Elemente mit einem kleinen Aussendurchmesser beim Einführen in die Aufnahme bis zur Anlage an der entsprechenden Entgratungseinrichtung zentriert werden.

Vorzugsweise ist die Schleiffläche in einem Winkel von 30° bis 60°, insbesondere in einem Winkel von 40° bis 50°, zur Rotationsachse des Grundkörpers geneigt, was eine vorteilhafte Entgratung des Endes des stangenförmigen Elementes beziehungsweise bei mehreren Entgratungseinrichtungen in einer Aufnahme die Führung eines stangenförmigen Elementes mit einem kleinen Aussendurchmesser in der Aufnahme gewährleistet.

Bevorzugt ist an dem zweiten Ende des Grundkörpers ein Drehmitnahmemittel für eine Antriebseinrichtung für eine einfache rotatorische Betätigung der Entgratungsvorrichtung vorgesehen. Das Drehmitnahmemittel ist beispielsweise als Innenvielkant oder als von dem zweiten Ende abragender Stift ausgebildet, der beispielsweise in eine Werkzeugaufnahme einer Bohrmaschine, eines Bohrhammers oder Schraubers einführbar ist. Somit ist die Entgratungsvorrichtung manuell sowie auch maschinell betätigbar.

Die Erfindung wird nachstehend anhand eines Ausführungsbeispiels näher erläutert. Es zeigen:
Fig. 1 Eine Entgratungsvorrichtung im Längsschnitt gern. Linie I-I in Fig. 2; und
Fig. 2 eine Ansicht auf des erste Ende des Grundkörpers der Entgratungsvorrichtung.

Grundsätzlich sind in den Figuren gleiche Teile mit den gleichen Bezugszeichen versehen.

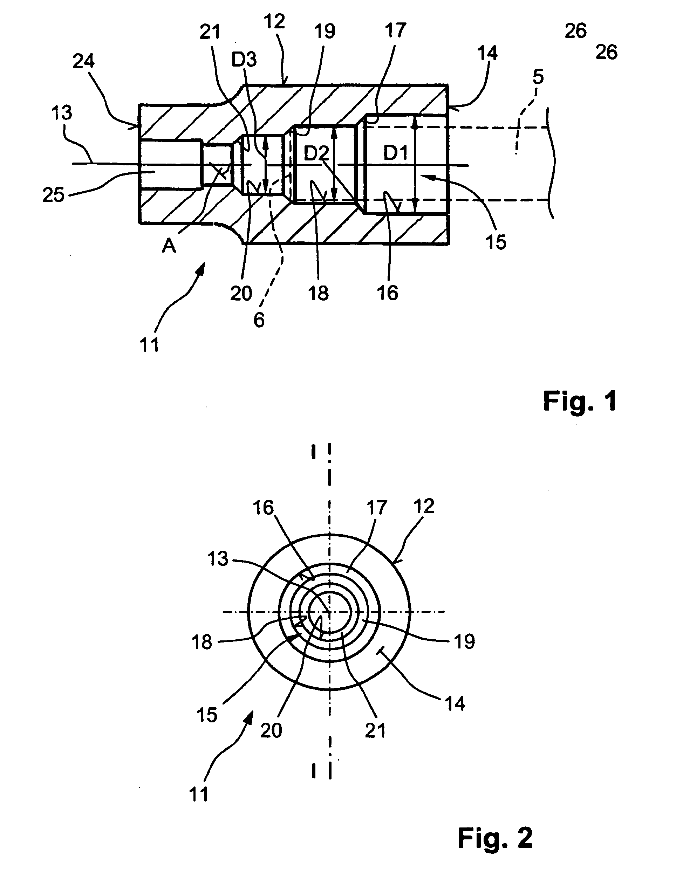

Die in den Figuren 1 und 2 dargestellte Entgratungsvorrichtung 11 zur Bearbeitung eines Endes 6 eines beispielsweise abgelängten stangenförmigen Elementes 5, wie einer Gewindestange, weist einen Grundkörper 12 auf, der sich entlang einer Rotationsachse 13 erstreckt, ein erstes Ende 14 und ein dem ersten Ende 14 gegenüberliegendes, zweites Ende 24 aufweist. An dem ersten Ende 14 ist eine Aufnahme 15 für das stangenförmige Element 5 vorgesehen.

Ausgehend vom ersten Ende 14 erstreckt sich in Richtung des zweiten Endes 24 bis zu einer ersten Entgratungseinrichtung 17 ein erster kreiszylindrischer Führungsabschnitt 16 mit einer parallel zu der Rotationsachse 13 verlaufenden Innenmantelfläche und einem Öffnungsquerschnitt, der einen Innendurchmesser D1 aufweist. Die erste Entgratungseinrichtung 17 weist eine dem ersten Ende 14 zugewandte Schleiffläche auf. Anschliessend an die erste Entgratungseinrichtung 17 erstreckt sich in Richtung des zweiten Endes 24 bis zu einer zweiten Entgratungseinrichtung 19 mit einer dem ersten Ende 14 zugewandten zweiten Schleiffläche ein zweiter kreiszylindrischer Führungsabschnitt 18 mit einer parallel zu der Rotationsachse 13 verlaufenden Innenmantelfläche und einem Öffnungsquerschnitt, der einen Innendurchmesser D2 aufweist, wobei der Innendurchmesser D2 kleiner als der Innendurchmesser D1 des ersten zylindrischen Führungsabschnitts 16 ausgebildet ist. Anschliessend an die zweite Entgratungseinrichtung 19 erstreckt sich in Richtung des zweiten Endes 24 bis zu einer dritten Entgratungseinrichtung 21 mit einer dem ersten Ende 14 zugewandten dritten Schleiffläche ein dritter kreiszylindrischer Führungsabschnitt 20 mit einer parallel zu der Rotationsachse 13 verlaufenden Innenmantelfläche und einem Öffnungsquerschnitt, der Innendurchmesser D3 aufweist, wobei der Innendurchmesser D3 kleiner als der Innendurchmesser D2 des zweiten zylindrischen Führungsabschnitts 18 ausgebildet ist. Die drei Führungsabschnitte 16, 18 und 20 sind konzentrisch zueinander und weisen als ihre gemeinsame Mittelachse die Rotationsachse 13 des Grundkörpers 12 auf. Die Innendurchmesser D1, D2, D3 der Führungsabschnitte 16, 18 bzw. 20 sind auf übliche Aussendurchmesser von handelsüblichen Stangenelementen abgestimmt. Beispielsweise wird in dem ersten zylindrischen Führungsabschnitt 16 eine M12-Gewindestange, in dem zweiten zylindrischen Führungsabschnitt 18 eine M10-Gewindestange und in dem dritten zylindrischen Führungsabschnitt 20 eine M8-Gewindestange sicher geführt.

Die Schleifflächen der Entgratungseinrichtungen 17, 19 und 21 sind jeweils radial umlaufend ausgebildet und sind in Richtung des zweiten Endes 24 des Grundkörpers 12 konisch zur Rotationsachse (13) des Grundkörpers (12) geneigt, wobei die Schleifflächen jeweils in einem Winkel A von 35° bis 55° zur Rotationsachse 13 des Grundkörpers 12 geneigt sind. Anstelle von gleich geneigten Schleifflächen der Entgratungseinrichtungen 17, 19 und 21 können diese auch in unterschiedlichen Winkeln beziehungsweise senkrecht zur Rotationsachse 13 des Grundkörpers 12 ausgerichtet sein.

An dem zweiten Ende 24 des Grundkörpers 12 ist ein Innenvierkant als Drehmitnahmemittel 25 für eine hier nicht dargestellte Antriebseinrichtung vorgesehen. Über das Drehmitnahmemittel 25 ist die Entgratungsvorrichtung 11 beispielsweise mit einem Elektroschrauber für einen rotatorischen Antrieb der Entgratungsvorrichtung 11 kuppelbar.

## Patentansprüche

1. Entgratungsvorrichtung zur Bearbeitung eines Endes (6) eines stangenförmigen Elementes (5), mit einem Grundkörper (12), der sich entlang einer Rotationsachse (13) erstreckt, ein erstes Ende (14) und ein dem ersten Ende (14) gegenüberliegendes, zweites Ende (24) aufweist, wobei
an dem ersten Ende (14) eine Aufnahme (15) für das stangenförmige Element (5) und in der Aufnahme (15) eine erste eine dem ersten Ende (14) zugewandte Schleiffläche aufweisende Entgratungseinrichtung (17) vorgesehen ist und
in der Aufnahme (15) zwischen der ersten Entgratungseinrichtung (17) und dem ersten Ende (14) ein erster zylindrischer Führungsabschnitt (16) vorgesehen ist, **dadurch gekennzeichnet, dass**
in der Aufnahme (15) in Richtung des zweiten Endes (24) beabstandet zu der ersten Entgratungseinrichtung (17) zumindest eine weitere Entgratungseinrichtung (19) mit einer dem ersten Ende (14) zugewandten Schleiffläche sowie
zwischen der ersten Entgratungseinrichtung (17) und der zumindest einen weiteren Entgratungseinrichtung (19) ein weiterer zylindrischer Führungsabschnitt (18) vorgesehen sind, wobei
der Öffnungsquerschnitt des zumindest einen weiteren zylindrischen Führungsabschnitts (18) kleiner als der Öffnungsquerschnitt des ersten zylindrischen Führungsabschnitts (16) ist.

2. Entgratungsvorrichtung nach Anspruch 1, **dadurch gekennzeichnet, dass** zumindest einer der zylindrischen Führungsabschnitte (16, 18, 20) kreiszylindrisch ist.

3. Entgratungsvorrichtung nach Anspruch 1 oder 2, **dadurch gekennzeichnet, dass** die Schleiffläche zumindest einer Entgratungseinrichtung (17, 19, 21) radial umlaufend ist.

4. Entgratungsvorrichtung nach einem der Ansprüche 1 bis 3, **dadurch gekennzeichnet, dass** die Schleiffläche zumindest einer Entgratungseinrichtung (17, 19, 21) in Richtung des zweiten Endes (24) des Grundkörpers (12) konisch zur Rotationsachse (13) des Grundkörpers (12) geneigt ist.

5. Entgratungsvorrichtung nach Anspruch 4, **dadurch gekennzeichnet, dass** die Schleiffläche in einem Winkel (A) von 35° bis 55° zur Rotationsachse (13) des Grundkörpers (12) geneigt ist.

6. Entgratungsvorrichtung nach einem der Ansprüche 1 bis 5, **dadurch gekennzeichnet, dass** an dem zweiten Ende (24) des Grundkörpers (12) ein Drehmitnahmemittel (25) für eine Antriebseinrichtung vorgesehen ist.

## Claims

1. Deburring device for working on one end (6) of a member (5) in rod form, having a main body (12) which extends along an axis of rotation (13) and which has a first end (14) and a second end (24) opposite from the first end (14), a receptacle (15) for the member (5) in rod form being provided at the first end (14) and a deburring means (17) having a abrasive surface facing towards the first end (14) being provided in the receptacle (15), and a first cylindrical guiding portion (16) being provided in the receptacle (15), between the first deburring means (17) and the first end (14), **characterised in that** there are provided in the receptacle (15), spaced away from the first deburring means (17) in the direction of the second end (24), at least one further deburring means (19) having a abrasive surface facing towards the first end (14) and, between the first deburring means (17) and the at least one further deburring means (19), a further cylindrical guiding portion (18), the cross-section of the opening formed by the at least one further cylindrical guiding portion (18) being smaller than the cross-section of the opening formed by the first cylindrical guiding portion (16).

2. Deburring device according to claim 1, **characterised in that** at least one of the cylindrical guiding portions (16, 18, 20) is a circular cylinder.

3. Deburring device according to claim 1 or 2, **characterised in that** the abrasive surface of at least one deburring means (17, 19, 21) extends radially and in a ring.

4. Deburring device according to one of claims 1 to 3, **characterised in that** the abrasive surface of at least one deburring means (17, 19, 21) is inclined to the axis of rotation (13) of the main body (12), towards the second end (24) of the main body (12), in a conical shape.

5. Deburring device according to claim 4, **characterised in that** the abrasive surface is inclined to the axis of rotation (13) of the main body (12) at an angle (A) of 35° to 55°.

6. Deburring device according to one of claims 1 to 5, **characterised in that** a means of entrainment in rotation (25) for a drive means is provided at the second end (24) of the main body (12).

## Revendications

1. Dispositif d'ébavurage pour traiter une extrémité (6) d'un élément en forme de barre (5), avec un corps de base (12) qui s'étend le long d'un axe de rotation (13) et présente une première extrémité (14) et une seconde extrémité (24) située en face de la première extrémité (14),
dans lequel sur la première extrémité (14) sont prévus un évidement (15) pour l'élément en forme de barre (5) et dans l'évidement (15), un premier dispositif d'ébavurage (17) présentant une surface meulée dirigée vers la première extrémité (14), et
dans l'évidement (15) entre le premier dispositif d'ébavurage (17) et la première extrémité (14) est prévue une première partie de guidage cylindrique (16),
**caractérisé en ce que** dans l'évidement (15), en direction de la seconde extrémité (24) à distance du premier dispositif d'ébavurage (17), sont prévus au moins un dispositif d'ébavurage supplémentaire (19) ayant une surface meulée dirigée vers la première extrémité (14) ainsi qu'une partie de guidage cylindrique supplémentaire (18) entre le premier dispositif d'ébavurage (17) et le au moins un dispositif d'ébavurage supplémentaire (19),
dans lequel la section transversale d'ouverture de la au moins une partie de guidage cylindrique supplémentaire (18) est plus petite que la section transversale d'ouverture de la première partie de guidage cylindrique (16).

2. Dispositif d'ébavurage selon la revendication 1, **caractérisé en ce qu'**au moins une des parties de guidage cylindriques (16, 18, 20) est cylindrique circulaire.

3. Dispositif d'ébavurage selon la revendication 1 ou 2, **caractérisé en ce que** la surface meulée est radialement circonférentielle à au moins un dispositif d'ébavurage (17, 19, 21).

4. Dispositif d'ébavurage selon l'une quelconque des revendications 1 à 3, **caractérisé en ce que** la surface meulée d'au moins un dispositif d'ébavurage (17, 19, 21) en direction de la seconde extrémité (24) du corps de base (12) est inclinée de manière conique par rapport à l'axe de rotation (13) du corps de base (12).

5. Dispositif d'ébavurage selon la revendication 4, **caractérisé en ce que** la surface meulée est inclinée à un angle (A) de 35° à 55° par rapport à l'axe de rotation (13) du corps de base (12).

6. Dispositif d'ébavurage selon l'une quelconque des revendications 1 à 5, **caractérisé en ce que** sur la seconde extrémité (24) du corps de base (12) sont prévus des moyens d'entraînement en rotation (25) pour un dispositif d'entraînement.
